(19) Europäisches Patentamt
European Patent Office
Office européen des brevets

(11) EP 0 698 856 A2

(12) EUROPEAN PATENT APPLICATION

(43) Date of publication:
28.02.1996 Bulletin 1996/09

(51) Int Cl.⁶: G06K 9/62

(21) Application number: 95305695.9

(22) Date of filing: 15.08.1995

(84) Designated Contracting States:
DE FR GB IT

(30) Priority: 26.08.1994 US 296830

(71) Applicant: AT&T Corp.
New York, NY 10013-2412 (US)

(72) Inventor: Nalwa, Vishvjit Singh
Middletown, New Jersey 07748 (US)

(74) Representative:
Buckley, Christopher Simon Thirsk et al
Woodford Green, Essex IG8 0TU (GB)

(54) **Method and apparatus for object classification using multiple models**

(57) Several models (14,18,22) that represent one class of objects are used to determine whether an object under examination belongs to the class. The data (from 10) describing the object under examination is compared with reference information in each of the models (14,18,22) to produce an error value or signal $\varepsilon_1, \varepsilon_2, ..\varepsilon_n$) at the output of each model. The inverses of the errors are summed (in 24) to form an inverse of a combined error. The combined error is compared to a threshold to determine if the object under examination belongs to the class represented by the models.

## FIG. 2

**Description**

**Background Of the Invention**

**Field of the Invention:**

The present invention relates to object classification; more specifically, using the results of a comparison with multiple models of a class to determine whether an object belongs to the class.

**Description of the Related Art**:

In the past, when multiple models representing a particular class were used to classify an object, a root-weighted mean square was used to combine the errors resulting from a comparison between the object and each of the models. This method of combining errors provided inadequate performance when an error resulting from one of the comparisons was particularly large. The large error resulted in a failure to correctly classify an object notwithstanding that the errors produced by comparisons with other models were relatively small.

**Summary of the Invention:**

The present invention uses several models that represent a particular class to determine whether an object belongs to the class represented by the models. The object, or data representing the object, is compared to each of the models or more particularly, the reference information in the models. The errors produced by comparing the object with the reference information in each of the models is used to adjust an impedance of a parallel impedance network. The current passing through the parallel impedance network is used as a measure of the overall error resulting from comparing the object to the models. When the current passing through the network is small, the overall or combined error from the comparison is large, and thereby indicates that the object does not belong to the class represented by the models. If the current passing through the network is large, the combined error produced by the comparison is small, and thereby indicates that the object belongs to the class represented by the models.

**Brief Description of the Drawings:**

FIG. 1 illustrates several models where the output errors resulting from comparing an object to the models are used to adjust the impedances of a parallel impedance network; and

FIG. 2 illustrates isocontour representing a constant overall error for the combined error outputs resulting from comparisons with two models.

**Description of the Preferred Embodiment:**

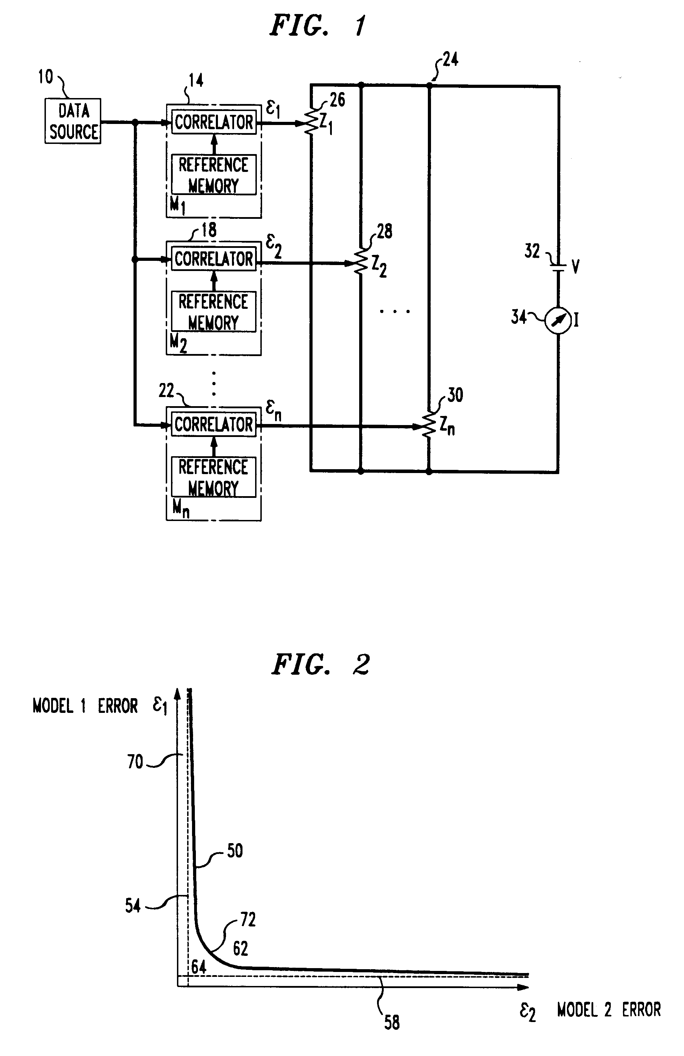

FIG. 1 illustrates several models in parallel that are used to provide error signals to a parallel impedance network. Each of the models represent the same class; however, each model is based on different characteristics of the class. Data source 10 provides data describing an object to be classified to models 14, 18 and 22. Three models are shown for clarity; however, any number of models may be used. Each model includes a comparison function and reference data. In embodiments that use neural networks or surface acoustic wave devices, the comparison function and reference data are embodied in one device. In embodiments using devices such as a correlator or a least squares error comparator, the comparison and reference data are provided using separate devices. Each model produces an error signal indicating the degree to which the object described by the data matches the reference information in the model.

The error resulting from a comparison with each model's reference information is used to adjust an impedance in parallel impedance network 24. Error $\varepsilon_1$ from model 14 is used to adjust impedance 26 which has an impedance value of $Z_1$, error $\varepsilon_2$ from model 18 is used to adjust impedance 28 which has an impedance value of $Z_2$, and error value $\varepsilon_n$ from model 22 is used to adjust impedance 30 with impedance value of $Z_n$. Voltage source 32 provides a voltage to the impedance network, and current measuring device 34 indicates the amount of current passing through the parallel impedance network. As a particular error increases or decreases, the impedance value adjusted in response to that error is also increased or decreased, respectively. As a result, when a particular error becomes small, the overall parallel impedance across network 24 becomes small which causes the current through current meter 34 to increase. When the current through meter 34 increases beyond a particular value or threshold, it can be determined that the object being examined belongs to the class represented by the models. Conversely, when the current through meter 34 is low, such as below a predetermined threshold, it can be determined that the object being examined does not belong to the class represented by the models.

Data source 10 may be any device that provides information that describes an object to be classified. The object described by data source 10 maybe a physical object, a handwriting sample, a symbol, a voice sample or utterance, a sound sample, or an event. For example, data source 10 may be an electronic pad that provides data describing the pen strokes used to write a character on the electronic pad. It is also possible for data source 10 to be a camera that provides an image of an object to be identified, a radar that provides data descriptive of an electromagnetic image of an object, or a sonar system that provides an acoustic image of an object. Data produced by data source 10 and provided to the models can be in the form of analog or digital signals, or it can be in electromagnetic or acoustic form.

Models 14, 18 and 22 are devices that contain reference information representative of a particular class, and means to compare the data from data source 10 with the reference information. Each of the models represent the same class; however, they represent the class based on different reference information or characteristics. For example, if the models seek to classify an object as a particular letter of the alphabet, model 14 may be based on the number of pen strokes used to create the character, model 18 may be based on the acceleration of the pen as the letter is being drawn, and model 22 may be based on the trajectory angles of the pen strokes. As another example, if the models seek to classify a physical object as a tank, several models may be used where a first model is based on color characteristics, a second model is based on surface texture characteristics, a third model is based on infrared signature characteristics, a fourth model is based on passively or actively acquired acoustic signature characteristics, and a fifth model is based on radar return characteristics. In yet another example, if the models seek to classify an event object as an occurrence of a nuclear explosion, several models may be used where one model is based on acoustic reference information, a second model is based on electromagnetic reference information and a third model is based on seismic reference information.

The models may be implemented used well-known modeling devices such as neural networks, surface acoustic wave (SAW) devices, or a correlator coupled to a reference memory. In an embodiment using a correlator, the correlator may be implemented using a programmable processor such as a computer, microcomputer, microprocessor, or one of the widely available correlator devices available from companies such as TRW. It is possible to replace the correlator and reference memory in model 14 with a trained neural network or a SAW device. The neural network may be implemented using specialized hardware or a programmable processor such as a computer, microcomputer or microprocessor. It is also possible in an optical embodiment to use filters and lenses to implement the reference data storage and comparison function of a model. In this embodiment, the filters contain the reference information and the lenses carry out a cross correlation so that the resulting optical power is inversely related to the error.

The errors produced by each of the models are used to adjust the impedances in impedance network 24. For example, as error $\varepsilon_1$ increases, impedance $Z_1$ increases, and as error $\varepsilon_2$ decreases, impedance $Z_2$ decreases. The variable impedances can be implemented using common devices such as a transistor, or in an optical embodiment, phototransistors. Current meter 34 can be an actual current meter, resistor or another well-known device that indicates the amount of current passing through the parallel impedance network.

For a particular set of models, a threshold current may be chosen such as current $I_T$. When the current through the impedance network is greater than $I_T$, the object in question is a member of the class represented by the models, and when the current is less than $I_T$, the object is not a member of the class. The current $I_T$ is related to the parallel impedance of parallel impedance network 24 in accordance with equation 1.

$$I_T = \frac{V}{Z_T} \tag{1}$$

Since the voltage may be considered a constant, a threshold current can be associated with a threshold parallel impedance $Z_T$. Equation 2 defines threshold impedance $Z_T$ in terms of parallel impedances $Z_1$ through $Z_N$.

$$\frac{1}{Z_T} = \frac{1}{Z_1} + \frac{1}{Z_2} + + \frac{1}{Z_n} \tag{2}$$

Since the impedance associated with the output of each model increases or decreases with the error produced by that model, equation 2 can be rewritten as equation 3 where there is an overall or combined threshold error $\varepsilon_T$.

$$\frac{1}{\varepsilon_T} = \frac{1}{\varepsilon_1} + \frac{1}{\varepsilon_2} + + \frac{1}{\varepsilon_n} \tag{3}$$

FIG. 2 illustrates an isocontour showing the different values of $\varepsilon_1$, $\varepsilon_2$ for a particular overall threshold error $\varepsilon_T$. The figure illustrates that the error threshold $\varepsilon_T$ is in the form of a hyperbola. It should be noted that the figure illustrates a two-dimensional situation where there are errors $\varepsilon_1$ and $\varepsilon_2$ from two models; however, it is possible to have a n-dimensional situation where there are n errors from n models. Equation 4 illustrates a generalized representation for error threshold $\varepsilon_T$ in a two-dimensional model.

$$\frac{1}{\varepsilon_T} = \frac{1}{a_1\varepsilon_1 + b_1} + \frac{1}{a_2\varepsilon_2 + b_2} \tag{4}$$

The variables $a_1$ and $a_2$ are real numbers and are used to weight the errors from an particular model. It should be noted that isocontour curve 50 approaches asymptotes 54 and 58 as errors $\varepsilon_1$ and $\varepsilon_2$ become infinite, respectively. Also with regard to equation 4, it should be noted that the variables $b_1$ and $b_2$ are real numbers and are used to shift asymptotes 54 and 58, respectively. Through the use of these variables, an isocontour can be adjusted to define a threshold error. For example, if the error $\varepsilon_1$ is associated with a unreliable model, variable $a_1$ may be made very large so that a small error from the unreliable model does not control and result in an incorrect classification.

The threshold error is used to examine the combined errors produced by several models in determining whether or not an object can be classified as belonging to the class represented by the models. For example, if the point produced by using the right side of equation 4 to combine the errors from the models results in a point located in area 62, which is above curve 50, it can be determined that the object is not a member of the class represented by the models. If the point produced by combining the errors from the models is in area 64, which is between curve 50, and axes $\varepsilon_1$ and $\varepsilon_2$, it can be determined that the object belongs to the class represented by the models.

It should be noted that isocontour 50 offers the advantage that a particular error from a model may be very large and still result in a determination that the object belongs to the class represented by the model based on a relatively small error produced by a second model. This is illustrated by point 70 which results from combining a large error $\varepsilon_1$ with a relatively small error $\varepsilon_2$. In this case, the object under consideration will be classified as belonging to the class represented by models 1 and 2 notwithstanding that model 1 had a relatively large error.

Equation 5 illustrates an even more generalized version of equation 4.

$$\frac{1}{\varepsilon_T^m} = \frac{1}{(a_1\varepsilon_1 + b_1)^m} + \frac{1}{(a_2\varepsilon_2 b_2)^m} \tag{5}$$

In this case, the denominators in equation 5 are raised to the m power, where m is a real number. Using this format, curve 50 can be varied so that point 72 can be moved closer to the intersection of asymptotes 54 and 58. As the value of m is increased beyond 1, point 72 moves closer to the intersection of asymptotes 54 and 58.

For the n-dimensional case, equation 5 can be rewritten as equation 6.

$$\frac{1}{\varepsilon_T^m} = \sum_{i=1}^{n} \frac{1}{(a_i\varepsilon_i + b_i)^m} \tag{6}$$

Equation 6 represents equation 5 written for the case where there are n models producing n errors to be combined.

The present invention can be implemented using hardware, software, or hardware and software. The models of FIG. 1 can be implemented using hardware such as surface acoustic wave devices or correlation devices and memories. They may also be implemented using neural networks that are implemented on a programmable processor or in hardware. Impedance network 24 and current meter 34 may be implemented in hardware, or they may be implemented on a programmable processor such as a computer, microcomputer or microprocessor. When implemented on a computer, the right side of equations 3, 4, 5 or 6 are used to determine a combined error which is compared against a threshold error $\varepsilon_T$. Once the errors are calculated, the combined error is compared to the threshold error to determine if the object belongs to the class represented by the models. If the combined error is greater than the threshold error, the object does not belong to the class represented by the models. If the combined error is less than or equal to the threshold error, the object belongs to the class represented by the models. Ideally, a particular choice of $\varepsilon_T$ would enable us to distinguish between objects that belong to the class represented by the models and those that do not belong to this class. In practice, for every choice of $\varepsilon_T$, we create a potential for two types of errors: false accepts and false rejects. A false reject is an instance in which we classify an object that belongs to the class represented by the models as not belonging to the class. A false accept is an instance in which we classify an object that does not belong to the class represented by the models as belonging to the class. As we increase $\varepsilon_T$, we increase the number of false accepts and decrease the number of false rejects. Thus, every choice of $\varepsilon_T$ has a particular rate of false accepts and false rejects associated with it, and our choice of $\varepsilon_T$ depends on how we wish to trade off false accepts for false rejects depending on the cost we associate with committing each type of error in a particular application.

**Claims**

1. A method for classifying an object as a member of a class using a plurality of models, CHARACTERIZED BY:
   providing data describing an object to be classified to a plurality of means for modeling to produce a plurality of model errors, each of said means for modeling representing the same class;

combining the inverse of said model errors to obtain an inverse of a combined error; and

comparing said combined error to a threshold to determine if the object is a member of said class.

2. The method of claim 1, CHARACTERIZED IN THAT said step of providing data comprises providing data to a plurality of neural networks.

3. The method of claim 1, CHARACTERIZED IN THAT said step of providing data comprises providing data to a plurality of neural networks implemented using a programmable processor.

4. The method of claim 1, CHARACTERIZED IN THAT said step of providing data comprises providing data to a plurality of surface acoustic wave devices.

5. The method of claim 1, CHARACTERIZED IN THAT said step of providing data comprises providing data to a plurality of correlators.

6. The method of claim 1, CHARACTERIZED IN THAT said step of providing data comprises providing data to a plurality of correlators implemented using a programmable processor.

7. The method of claim 1, CHARACTERIZED IN THAT said step of providing data comprises providing data describing an image.

8. The method of claim 1, CHARACTERIZED IN THAT said step of providing data comprises providing data describing an utterance.

9. The method of claim 1, CHARACTERIZED IN THAT said step of providing data comprises providing data describing a signature.

10. The method of claim 1, CHARACTERIZED IN THAT said step of providing data comprises providing data describing a symbol.

## FIG. 1

## FIG. 2